# EUROPEAN PATENT SPECIFICATION

(11) **EP 4 056 444 B1**
(45) Date of publication and mention of the grant of the patent: **07.05.2025**
(21) Application number: 22161527.1
(22) Date of filing: 11.03.2022
(51) Int. Cl.: B60W 60/00

(54) **AUTONOMOUS DRIVING CONTROL METHOD, AUTONOMOUS DRIVING CONTROL SYSTEM, AND VEHICLE**
AUTONOMES ANTRIEBSSTEUERUNGSVERFAHREN, AUTONOMES FAHRSTEUERUNGSSYSTEM UND FAHRZEUG
PROCÉDÉ DE COMMANDE DE CONDUITE AUTONOME, SYSTÈME DE COMMANDE DE CONDUITE AUTONOME, ET VÉHICULE

(30) Priority: 11.03.2021 CN 202110266391
(43) Date of publication of application: 14.09.2022
(73) Proprietor: Nio Technology (Anhui) Co., Ltd, Hefei City, Anhui 230601 (CN)
(72) Inventor: ZHANG, Xianhui, Hefei City, Anhui, 230601 (CN); YUAN, Da, Hefei City, Anhui, 230601 (CN); XU, Chao, Hefei City, Anhui, 230601 (CN); WANG, Baotian, Hefei City, Anhui, 230601 (CN); DENG, Shengwei, Hefei City, Anhui, 230601 (CN); XIAO, Bohong, Hefei City, Anhui, 230601 (CN)
(74) Representative: Vossius & Partner Patentanwälte Rechtsanwälte mbB

(56) References cited:
- US-A1- 2017 158 225
- US-A1- 2017 305 458
- US-A1- 2019 299 984

## Description

### Technical Field

The invention relates to the field of autonomous driving, and in particular to an autonomous driving control method, an autonomous driving control system, and a vehicle.

### Background Art

At present, motion control over a vehicle mainly includes: braking control, drive control, steering control, and suspension control. Autonomous driving functions generally relate to the test of controllers for vehicle motion control. When a controller is faulty but still has a control capacity, an autonomous driving control system generally prohibits the autonomous driving functions from being enabled or directly exits the autonomous driving functions, such that when the controller fails, a high-level autonomous driving function is unavailable and a low-level autonomous driving function is also prohibited from being enabled. In addition, when a high-level autonomous driving function is activated, if the vehicle motion controller fails, it cannot be downgraded to a low-level autonomous driving function but is directly transferred to a driver to take over.

Therefore, it is urgent to seek an autonomous driving control method to solve the above problems.

US2017/0305458A discloses electrical power steering control using system state predictions. An embodiment of a method of controlling one or more components of a vehicle includes receiving a reference steering command and one or more measurement signals related to a steering system of a vehicle, and estimating, by a processing device, a state of the steering system based on the one or more measurement signals, the steering system including at least a handwheel and a steering motor.

US2017/0158225A relates to vehicle curvature determination. A current state of a vehicle is identified. Vehicle path curvature limits are determined. A curvature performance profile to follow is determined based at least in part the vehicle path curvature limits. A direction of the vehicle is controlled based at least in part the curvature performance profile.

US2019/0299984A discloses systems and methods for navigating a host vehicle. A system for navigating a host vehicle may: receive, from an image capture device, an image representative of an environment of the host vehicle; determine a navigational action for accomplishing a navigational goal of the host vehicle; analyze the image to identify a target vehicle in the environment of the host vehicle; determine a next-state distance between the host vehicle and the target vehicle that would result if the navigational action was taken; determine a maximum braking capability of the host vehicle, a maximum acceleration capability of the host vehicle, and a speed of the host vehicle; determine a stopping distance for the host vehicle; determine a speed of the target vehicle and assume a maximum braking capability of the target vehicle; and implement the navigational action if the stopping distance for the host vehicle is less than the next-state distance summed together with a target vehicle travel distance.

### Summary of the Invention

The subject-matter of the present invention is defined by the features of the independent claims. Further preferred embodiments of the present invention are defined in the dependent claims. In view of this, according to a first aspect of the invention, an autonomous driving control method is provided, for effectively solving the above problems and other problems in the prior art. The autonomous driving control method comprises:
estimating motion control capacities of a vehicle on the basis of performance parameters and/or structure parameters of the vehicle;
grading autonomous driving functions of the vehicle on the basis of the motion control capacities; and
providing the graded autonomous driving functions on the basis of a state of the vehicle, wherein the motion control capacities of the vehicle comprise an acceleration capacity, a deceleration capacity, a steering capacity, a parking capacity, and a suspension capacity, wherein the performance parameters comprise: a road adhesion coefficient, a battery charge and discharge performance, an electric motor drive performance, an input of a steering system, a steering control performance fed back by a brake system, a state of an electronic parking system, a brake torque of the brake system, a braking torque of an electric motor, and a state of a suspension system; and
the structure parameters comprise: vehicle weight and a location of the center of mass. The method is characterized by estimating motion control capacities of a vehicle on the basis of performance parameters and/or structure parameters of the vehicle comprises: computing available parking function states of the vehicle on the basis of the state of the electronic parking system, the brake torque of the brake system and the braking torque of the electric motor, to estimate the parking capacity, wherein the parking function states comprise a full-function execution state, a five-minute execution state, and a non-execution state, estimating a state of a suspension stiffness control capacity of the vehicle on the basis of the state of the suspension system, to estimate the suspension capacity.

Optionally, in the autonomous driving control method as described above, estimating motion control capacities of a vehicle on the basis of performance parameters and/or structure parameters of the vehicle comprises:
calculating an available adhesion force for each tire of the vehicle on the basis of the road adhesion coefficient, the vehicle weight and the location of the center of mass; and
calculating a maximum acceleration and a maximum deceleration of the vehicle on the basis of the adhesion force, the battery charge and discharge performance and the electric motor drive performance, to estimate the acceleration capacity and the deceleration capacity.

Optionally, in the autonomous driving control method as described above, estimating motion control capacities of a vehicle on the basis of performance parameters and/or structure parameters of the vehicle comprises:
calculating an available adhesion force for each tire of the vehicle on the basis of the road adhesion coefficient, the vehicle weight and the location of the center of mass; and
calculating a maximum steering of the vehicle on the basis of the adhesion force, the input of the steering system and the steering control performance fed back by the brake system, to estimate the steering capacity.

Disclosed is also an autonomous driving control method with estimating motion control capacities of a vehicle on the basis of performance parameters and/or structure parameters of the vehicle which comprises:
computing available parking function states of the vehicle on the basis of the state of the electronic parking system, the brake torque of the brake system and the braking torque of the electric motor, to estimate the parking capacity,
wherein the parking function states comprise a full-function execution state, a five-minute execution state, and a non-execution state.

A autonomous driving control method as described above, estimating motion control capacities of a vehicle on the basis of performance parameters and/or structure parameters of the vehicle comprises:
estimating a state of a suspension stiffness control capacity of the vehicle on the basis of the state of the suspension system, to estimate the suspension capacity.

According to a second aspect of the invention, an autonomous driving control system is provided. The autonomous driving control system comprises:
an estimating module configured to estimate motion control capacities of a vehicle on the basis of performance parameters and/or structure parameters of the vehicle;
a grading module configured to grade autonomous driving functions of the vehicle on the basis of the motion control capacities; and
an autonomous driving function providing module configured to provide the graded autonomous driving functions on the basis of a state of the vehicle, wherein the motion control capacities of the vehicle comprise an acceleration capacity, a deceleration capacity, a steering capacity, a parking capacity, and a suspension capacity, wherein the performance parameters comprise: a road adhesion coefficient, a battery charge and discharge performance, an electric motor drive performance, an input of a steering system, a steering control performance fed back by a brake system, a state of an electronic parking system, a brake torque of the brake system, a braking torque of an electric motor, and a state of a suspension system; and the structure parameters comprise: vehicle weight and a location of the center of mass, which is characterised in that, estimating motion control capacities of a vehicle on the basis of performance parameters and/or structure parameters of the vehicle comprises: computing available parking function states of the vehicle on the basis of the state of the electronic parking system, the brake torque of the brake system and the braking torque of the electric motor, to estimate the parking capacity, wherein the parking function states comprise a full-function execution state, a five-minute execution state, and a non-execution state, estimating a state of a suspension stiffness control capacity of the vehicle on the basis of the state of the suspension system, to estimate the suspension capacity.

Optionally, in the autonomous driving control system as described above, the estimating module comprises: a road adhesion force estimation unit, an electric motor estimation unit, a battery estimation unit, a braking estimation unit, a steering estimation unit, a parking estimation unit, and a suspension estimation unit.

According to a third aspect of the invention, a vehicle is provided, comprising the autonomous driving control system described above.

It can be appreciated that the autonomous driving control method of the invention can provide the motion control capacities of the vehicle in real time, give play to the maximum performance of each controller, and support better grading of the autonomous driving functions, so as to provide different grades of autonomous driving functions in different vehicle states to improve driving experience.

### Brief Description of the Drawings

The invention will become more readily understood with reference to the accompanying drawings. Those skilled in the art will readily appreciate that the accompanying drawings are merely for illustrative purposes and are not intended to limit the scope of protection of the invention. In addition, like components are indicated by like numbers in the figures, in which:
Fig. 1 is a flowchart showing an autonomous driving control method according to an exemplary embodiment of the invention;
Fig. 2 is a schematic block diagram showing an autonomous driving control system according to an exemplary embodiment of the invention; and
Fig. 3 is a schematic block diagram showing an estimating module of an autonomous driving control system according to an exemplary embodiment of the invention.

### Detailed Description of Embodiments

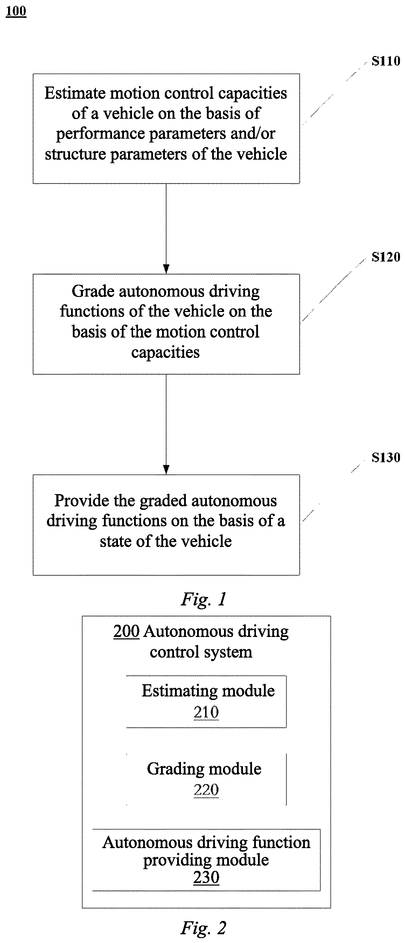

Fig. 1 shows a flowchart of an autonomous driving control method 100 according to an embodiment of the disclosure. Hereinafter, as a non-limited example, the vehicle is considered to be a type of motor vehicle, for example, refers to a car, a coach, a truck, or a commercial vehicle. However, the disclosure is not limited to this type of vehicle. The disclosure relates to any type of land vehicle that can be moved and driven on the ground and can be parked in or leave a parking area.

Referring to Fig. 1, the autonomous driving control method 100 includes: estimating motion control capacities of a vehicle on the basis of performance parameters and/or structure parameters of the vehicle (step S110); grading autonomous driving functions of the vehicle on the basis of the motion control capacities (step S120); and providing the graded autonomous driving functions on the basis of a state of the vehicle (step S130).

Fig. 2 shows a schematic block diagram of an autonomous driving control system 200 according to an embodiment of the invention. Referring to Fig. 2, the autonomous driving control system 200 includes an estimating module 210, a grading module 220, and an autonomous driving function providing module 230.

For the purpose of illustration, the autonomous driving control method 100 is described below with reference to Figs. 1 and 2.

In step S110, the motion control capacities of the vehicle are estimated on the basis of performance parameters and/or structure parameters of the vehicle. In some embodiments, step S110 is implemented by the estimating module 210. Specifically, the estimating module 210 estimates the motion control capacities of the vehicle on the basis of the performance parameters and/or the structure parameters of the vehicle. As an example, the motion control capacities of the vehicle generally include an acceleration capacity, a deceleration capacity, a steering capacity, a parking capacity, and a suspension capacity. The performance parameters include: a road adhesion coefficient, a battery charge and discharge performance, an electric motor drive performance, an input of a steering system, a steering control performance fed back by a brake system, a state of an electronic parking system, a brake torque of the brake system, a braking torque of an electric motor, a state of a suspension system, etc. The structure parameters are related to the structure of the vehicle itself, including: vehicle weight, a location of the center of mass, etc.

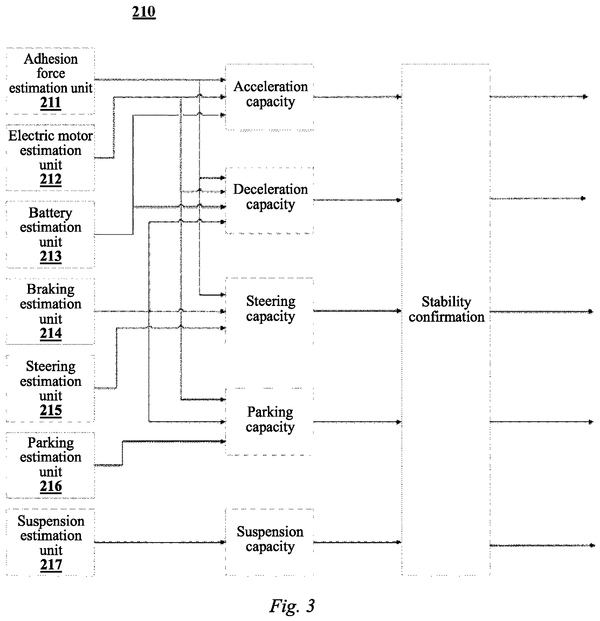

Further referring to Fig. 3 , the estimating module 210 of the autonomous driving control system 200 includes: an adhesion force estimation unit 211 configured to estimate a road adhesion force; an electric motor estimation unit 212 configured to estimate a drive torque and a braking torque of an electric motor; a battery estimating module 213 configured to estimate a torque corresponding to a battery charge and discharge capacity; a brake estimation unit 214 configured to estimate a braking torque of a brake; a steering estimation unit 215 configured to estimate a capacity of a steering system; a parking estimation unit 216 configured to estimate a state of a parking system; and a suspension estimation unit 217 configured to estimate a suspension control state. According to the invention, the autonomous driving control system estimates the motion control capacities of the vehicle from the vehicle system level, and synergizes various controllers of the vehicle during motion control estimation. The following will describe for the specific motion control capacities.

For the acceleration capacity and the deceleration capacity of the vehicle, step S110 includes: calculating an available adhesion force for each tire of the vehicle on the basis of the road adhesion coefficient, the vehicle weight and the location of the center of mass; and calculating a maximum acceleration and a maximum deceleration of the vehicle on the basis of the adhesion force, the battery charge and discharge performance and the electric motor drive performance, to estimate the acceleration capacity and the deceleration capacity. In this case, the acceleration capacity and the deceleration capacity of the vehicle are estimated by means of the adhesion force estimation unit 211, the electric motor estimation unit 212 and the battery estimation unit 213.

For the steering capacity of the vehicle, step S110 includes: calculating an available adhesion force for each tire of the vehicle on the basis of the road adhesion coefficient, the vehicle weight and the location of the center of mass; and calculating a maximum steering of the vehicle on the basis of the adhesion force, the input of the steering system and the steering control performance fed back by the brake system, to estimate the steering capacity. In this case, the steering capacity of the vehicle is estimated by means of the adhesion force estimation unit 211, the braking estimation unit 214 and the steering estimation unit 215.

For the parking capacity of the vehicle, step S110 includes: computing available parking function states of the vehicle on the basis of the state of the electronic parking system, the brake torque of the brake system and the braking torque of the electric motor, to estimate the parking capacity. The parking function states include a full-function execution state, a five-minute execution state, and a non-execution state. In this case, the parking capacity of the vehicle is estimated by means of the electric motor estimation unit 212 and the parking estimation unit 216.

For the suspension capacity of the vehicle, step S110 includes: estimating a state of a suspension stiffness control capacity of the vehicle on the basis of the state of the suspension system, to estimate the suspension capacity. In this case, the suspension capacity of the vehicle is estimated by means of the suspension estimation unit 217.

In the above, by estimating road conditions, the location of the center of gravity and the vehicle weight in conjunction with feedbacks of capacities of executors, the acceleration capacity, the deceleration capacity, the steering capacity, the parking capacity, and the suspension capacity of the vehicle are estimated from the vehicle level. An estimation result obtained can be output as a final estimation result of the various motion control capacities after performing "stability confirmation" (see Fig. 3).

In step S120, autonomous driving functions of the vehicle are graded on the basis of the motion control capacities. In some embodiments, step S120 is implemented by the grading module 220. Specifically, the grading module 220 grades the autonomous driving functions of the vehicle on the basis of the final estimation result of the motion control capacities mentioned above. For example, if the motion control capacities of the vehicle including the acceleration capacity, the deceleration capacity, the steering capacity, the parking capacity and the suspension capacity are estimated by the estimating module 210, and only the parking capacity is poor, then the grading module 220 may grade the autonomous driving function related to parking as a low-level autonomous driving function, and grade the autonomous driving functions related to acceleration, deceleration, steering, and suspension as high-level autonomous driving functions. Through the motion control estimation under the synergy of multiple controllers mentioned above, providing the vehicle motion control capacities to the autonomous driving control system without increasing the hardware cost is ensured, and better grading of the autonomous driving functions is supported.

In step S130, the graded autonomous driving functions are provided on the basis of a state of the vehicle. In some embodiments, step S130 is implemented by the autonomous driving function providing module 230. Specifically, the autonomous driving function providing module 230 provides the graded autonomous driving functions on the basis of the state of the vehicle. That is, after the autonomous driving functions are graded, the autonomous driving control system provides different grades of autonomous driving functions for different states of the vehicle (for instance, when the vehicle accelerates, decelerates, turns or parks). For example, when the autonomous driving function related to parking is graded low, and the autonomous driving functions related to acceleration, deceleration, steering and suspension are graded high, function downgrading may be carried out during parking of the vehicle, and a driver takes over the steering wheel. The high-level autonomous driving functions of the vehicle can still maintain normal operation during acceleration, deceleration and steering, such that the high-level autonomous driving functions of the vehicle are prevented from directly exiting, thereby facilitating providing of different grades of autonomous driving functions in different vehicle states, and significantly improving experience of using the autonomous driving functions.

According to another aspect of the invention, the above-mentioned autonomous driving control system 200 is also provided, which includes an estimating module 210, a grading module 220, and an autonomous driving function providing module 230.

The estimating module 210 is configured to estimate motion control capacities of a vehicle on the basis of performance parameters and/or structure parameters of the vehicle;
the grading module 220 is configured to grade autonomous driving functions of the vehicle on the basis of the motion control capacities; and
the autonomous driving function providing module 230 is configured to provide the graded autonomous driving functions on the basis of a state of the vehicle.

The operations of the various modules of the autonomous driving control system 200 have been described in detail above with respect to the embodiment of the autonomous driving control method in Fig. 1, and will not be described in detail for the sake of concision. It will be appreciated that the autonomous driving control system 200 can have the same advantages as the embodiment of autonomous driving control method described above.

In addition, although specific functions are discussed above with reference to specific modules, it should be noted that the functions of each module discussed herein may be divided into a plurality of modules, and/or at least some functions of the plurality of modules may be combined into a single module. The specific modules that perform an action discussed herein include the specific module itself performing the action, or alternatively the specific modules call or otherwise access another component or module that performs the action (or performs the action in combination with the specific modules). Therefore, the specific modules that perform the action may include the specific modules that perform the action themselves and/or another module that is called or otherwise accessed by the specific modules that perform the action.

According to still another aspect of the invention, a vehicle is also provided. The vehicle according to an embodiment of the disclosure may include the autonomous driving control system 200 as described above. According to some embodiments, the autonomous driving control method 100 described above may be implemented on the vehicle.

Several specific embodiments are listed above to detail the autonomous driving method, the autonomous driving control system, and the vehicle, and these examples are only for explaining the principle of the invention and the implementations thereof, rather than limiting the invention; and those of ordinary skill in the art can make various modifications and improvements without departing from the scope of the invention. Therefore, all equivalent technical solutions should fall within the scope of the invention and be defined by the claims of the invention.

## Claims

1. An autonomous driving control method, comprising:
estimating motion control capacities of a vehicle on the basis of performance parameters and/or structure parameters of the vehicle (S110);
grading autonomous driving functions of the vehicle on the basis of the motion control capacities (S120); and
providing the graded autonomous driving functions on the basis of a state of the vehicle (S130), wherein the motion control capacities of the vehicle comprise an acceleration capacity, a deceleration capacity, a steering capacity, a parking capacity, and a suspension capacity, wherein
the performance parameters comprise: a road adhesion coefficient, a battery charge and discharge performance, an electric motor drive performance, an input of a steering system, a steering control performance fed back by a brake system, a state of an electronic parking system, a brake torque of the brake system, a braking torque of an electric motor, and a state of a suspension system; and
the structure parameters comprise: vehicle weight and a location of the center of mass, which is **characterised in that**,
estimating motion control capacities of a vehicle on the basis of performance parameters and/or structure parameters of the vehicle (S110) comprises:
computing available parking function states of the vehicle on the basis of the state of the electronic parking system, the brake torque of the brake system and the braking torque of the electric motor, to estimate the parking capacity,
wherein the parking function states comprise a full-function execution state, a five-minute execution state, and a non-execution state,
estimating a state of a suspension stiffness control capacity of the vehicle on the basis of the state of the suspension system, to estimate the suspension capacity.

2. The autonomous driving control method according to claim 1, wherein estimating motion control capacities of a vehicle on the basis of performance parameters and/or structure parameters of the vehicle (S110) comprises:
calculating an available adhesion force for each tire of the vehicle on the basis of the road adhesion coefficient, the vehicle weight and the location of the center of mass; and
calculating a maximum acceleration and a maximum deceleration of the vehicle on the basis of the adhesion force, the battery charge and discharge performance and the electric motor drive performance, to estimate the acceleration capacity and the deceleration capacity.

3. The autonomous driving control method according to claim 1, wherein estimating motion control capacities of a vehicle on the basis of performance parameters and/or structure parameters of the vehicle (S110) comprises:
calculating an available adhesion force for each tire of the vehicle on the basis of the road adhesion coefficient, the vehicle weight and the location of the center of mass; and
calculating a maximum steering of the vehicle on the basis of the adhesion force, the input of the steering system and the steering control performance fed back by the brake system, to estimate the steering capacity.

4. An autonomous driving control system (200), comprising:
an estimating module (210) configured to estimate motion control capacities of a vehicle on the basis of performance parameters and/or structure parameters of the vehicle;
a grading module (220) configured to grade autonomous driving functions of the vehicle on the basis of the motion control capacities; and
an autonomous driving function providing module (230) configured to provide the graded autonomous driving functions on the basis of a state of the vehicle, wherein the motion control capacities of the vehicle comprise an acceleration capacity, a deceleration capacity, a steering capacity, a parking capacity, and a suspension capacity, wherein
the performance parameters comprise: a road adhesion coefficient, a battery charge and discharge performance, an electric motor drive performance, an input of a steering system, a steering control performance fed back by a brake system, a state of an electronic parking system, a brake torque of the brake system, a braking torque of an electric motor, and a state of a suspension system; and
the structure parameters comprise: vehicle weight and a location of the center of mass, which is **characterised in that**,
estimating motion control capacities of a vehicle on the basis of performance parameters and/or structure parameters of the vehicle comprises:
computing available parking function states of the vehicle on the basis of the state of the electronic parking system, the brake torque of the brake system and the braking torque of the electric motor, to estimate the parking capacity,
wherein the parking function states comprise a full-function execution state, a five-minute execution state, and a non-execution state,
estimating a state of a suspension stiffness control capacity of the vehicle on the basis of the state of the suspension system, to estimate the suspension capacity.

5. The autonomous driving control system according to claim 4, wherein the estimating module (210) comprises: an adhesion force estimation unit, an electric motor estimation unit, a battery estimation unit, a braking estimation unit, a steering estimation unit, a parking estimation unit, and a suspension estimation unit.

6. A vehicle, comprising the autonomous driving control system according to claim 4.

## Patentansprüche

1. Autonomes Fahrsteuerungsverfahren, das Folgendes umfasst:
Schätzen von Bewegungssteuerungsfähigkeiten eines Fahrzeugs auf Grundlage von Leistungsparametern und/oder Strukturparametern des Fahrzeugs (S110);
Bewerten von autonomen Fahrfunktionen des Fahrzeugs auf Grundlage der Bewegungssteuerungsfähigkeiten (S120); und
Bereitstellen der bewerteten autonomen Fahrfunktionen auf Grundlage eines Zustands des Fahrzeugs (S130), wobei die Bewegungssteuerungsfähigkeiten des Fahrzeugs eine Beschleunigungsfähigkeit, eine Verlangsamungsfähigkeit, eine Lenkfähigkeit, eine Parkfähigkeit und eine Aufhängungsfähigkeit umfassen, wobei
die Leistungsparameter Folgendes umfassen: einen Straßenadhäsionskoeffizienten, eine Batterielade- und -entladefähigkeit, eine Elektromotor-Antriebsleistung, eine Eingabe eines Lenksystems, eine durch ein Bremssystem zurückgeführte Lenksteuerleistung, einen Zustand eines elektronischen Parksystems, ein Bremsmoment des Bremssystems, ein Bremsmoment eines Elektromotors und einen Zustand eines Aufhängungssystems; und
die Strukturparameter Folgendes umfassen: Fahrzeuggewicht und einen Ort eines Massemittelpunkts, was **dadurch gekennzeichnet ist, dass**
Schätzen von Bewegungssteuerungsfähigkeiten eines Fahrzeugs auf Grundlage von Leistungsparametern und/oder Strukturparametern des Fahrzeugs (S110) Folgendes umfasst:
Berechnen von verfügbaren Parkfunktionszuständen des Fahrzeugs auf Grundlage des Zustands des elektronischen Parksystems, des Bremsmoments des Bremssystems und des Bremsmoments des Elektromotors, zum Schätzen der Parkfähigkeit,
wobei die Parkfunktionszustände Folgendes umfassen: einen Vollfunktions-Ausführungszustand, einen Fünf-Minuten-Ausführungszustand und einen Nicht-Ausführungszustand,
Schätzen eines Zustands einer Aufhängungssteifigkeitssteuerungsfähigkeit des Fahrzeugs auf Grundlage des Zustands des Aufhängungssystems, zum Schätzen der Aufhängungsfähigkeit.

2. Autonomes Fahrsteuerungsverfahren nach Anspruch 1, wobei Schätzen von Bewegungssteuerungsfähigkeiten eines Fahrzeugs auf Grundlage von Leistungsparametern und/oder Strukturparametern des Fahrzeugs (S110) Folgendes umfasst:
Berechnen einer verfügbaren Adhäsionskraft für jeden Reifen des Fahrzeugs auf Grundlage des Straßenadhäsionskoeffizienten, des Fahrzeuggewichts und des Ortes des Massemittelpunkts; und
Berechnen einer maximalen Beschleunigung und einer maximalen Verlangsamung des Fahrzeugs auf Grundlage der Adhäsionskraft, der Batterielade- und -entladeleistung und der Elektromotor-Antriebsleistung, zum Schätzen der Beschleunigungsfähigkeit und der Verlangsamungsfähigkeit.

3. Autonomes Fahrsteuerungsverfahren nach Anspruch 1, wobei Schätzen von Bewegungssteuerungsfähigkeiten eines Fahrzeugs auf Grundlage von Leistungsparametern und/oder Strukturparametern des Fahrzeugs (S110) Folgendes umfasst:
Berechnen einer verfügbaren Adhäsionskraft für jeden Reifen des Fahrzeugs auf Grundlage des Straßenadhäsionskoeffizienten, 'des Fahrzeuggewichts und des Ortes des Massemittelpunkts; und
Berechnen einer maximalen Lenkung des Fahrzeugs auf Grundlage der Adhäsionskraft, der Eingabe des Lenksystems und der durch das Bremssystem zurückgeführten Lenksteuerleistung, zum Schätzen der Lenkfähigkeit.

4. Autonomes Fahrsteuerungssystem (200), das Folgendes umfasst:
ein Schätzmodul (210), ausgelegt zum Schätzen von Bewegungssteuerungsfähigkeiten eines Fahrzeugs auf Grundlage von Leistungsparametern und/oder Strukturparametern des Fahrzeugs;
ein Bewertungsmodul (220), ausgelegt zum Bewerten von autonomen Fahrfunktionen des Fahrzeugs auf Grundlage der Bewegungssteuerungsfähigkeiten; und
ein autonomes Fahrfunktions-Bereitstellungsmodul (230), ausgelegt zum Bereitstellen der bewerteten autonomen Fahrfunktionen auf Grundlage eines Zustands des Fahrzeugs, wobei die Bewegungssteuerungsfähigkeiten des Fahrzeugs eine Beschleunigungsfähigkeit, eine Verlangsamungsfähigkeit, eine Lenkfähigkeit, eine Parkfähigkeit und eine Aufhängungsfähigkeit umfassen, wobei
die Leistungsparameter Folgendes umfassen: einen Straßenadhäsionskoeffizienten, eine Batterielade- und -entladefähigkeit, eine Elektromotor-Antriebsleistung, eine Eingabe eines Lenksystems, eine durch ein Bremssystem zurückgeführte Lenksteuerleistung, einen Zustand eines elektronischen Parksystems, ein Bremsmoment des Bremssystems, ein Bremsmoment eines Elektromotors und einen Zustand eines Aufhängungssystems; und
die Strukturparameter Folgendes umfassen: Fahrzeuggewicht und einen Ort eines Massemittelpunkts, was **dadurch gekennzeichnet ist, dass**
Schätzen von Bewegungssteuerungsfähigkeiten eines Fahrzeugs auf Grundlage von Leistungsparametern und/oder Strukturparametern des Fahrzeugs Folgendes umfasst:
Berechnen von verfügbaren Parkfunktionszuständen des Fahrzeugs auf Grundlage des Zustands des elektronischen Parksystems, des Bremsmoments des Bremssystems und des Bremsmoments des Elektromotors, zum Schätzen der Parkfähigkeit,
wobei die Parkfunktionszustände Folgendes umfassen: einen Vollfunktions-Ausführungszustand, einen Fünf-Minuten-Ausführungszustand und einen Nicht-Ausführungszustand,
Schätzen eines Zustands einer Aufhängungssteifigkeitssteuerungsfähigkeit des Fahrzeugs auf Grundlage des Zustands des Aufhängungssystems, zum Schätzen der Aufhängungsfähigkeit.

5. Autonomes Fahrsteuerungssystem nach Anspruch 4, wobei das Schätzmodul (210) Folgendes umfasst: eine Adhäsionskraftschätzeinheit, eine Elektromotorschätzeinheit, eine Batterieschätzeinheit, eine Bremsenschätzeinheit, eine Lenkungsschätzeinheit, eine Parkschätzeinheit und eine Aufhängungsschätzeinheit.

6. Fahrzeug, umfassend das autonome Fahrsteuerungssystem nach Anspruch 4.

## Revendications

1. Procédé de commande de conduite autonome, comprenant :
l'estimation de capacités de commande de mouvement d'un véhicule, sur la base de paramètres de performance et/ou de paramètres de structure du véhicule (S110) ;
le classement de fonctions de conduite autonome du véhicule ,sur la base des capacités de commande de mouvement (S120) ; et
la fourniture des fonctions de conduite autonome classées, sur la base d'un état du véhicule (S130), dans lequel les capacités de commande de mouvement du véhicule comprennent une capacité d'accélération, une capacité de ralentissement, une capacité de braquage, une capacité de stationnement, et une capacité de suspension, dans lequel
les paramètres de performance comprennent : un coefficient d'adhérence à la route, une performance de charge et de décharge de batterie, une performance de conduite à moteur électrique, une entrée d'un système de braquage, une performance de commande de braquage transmise en retour par un système de frein, un état d'un système de stationnement électronique, un couple de frein du système de frein, un couple de freinage d'un moteur électrique, et un état d'un système de suspension ; et
les paramètres de structure comprennent : un poids de véhicule et un emplacement du centre de masse, qui est **caractérisé en ce que**
l'estimation de capacités de commande de mouvement d'un véhicule, sur la base de paramètres de performance et/ou de paramètres de structure du véhicule (S110) comprend :
la computation d'états de fonction de stationnement disponibles du véhicule, sur la base de l'état du système de stationnement électronique, du couple de frein du système de frein, et du couple de freinage du moteur électrique, pour estimer la capacité de stationnement,
dans lequel les états de fonction de stationnement comprennent un état d'exécution à fonction complète, un état d'exécution à cinq minutes, et un état de non-exécution,
l'estimation d'un état d'une capacité de commande de raideur de suspension du véhicule, sur la base de l'état du système de suspension, pour estimer la capacité de suspension.

2. Procédé de commande de conduite autonome selon la revendication 1, dans lequel l'estimation de capacités de commande de mouvement d'un véhicule, sur la base de paramètres de performance et/ou de paramètres de structure du véhicule (S110), comprend :
le calcul d'une force d'adhérence disponible pour chaque pneu du véhicule, sur la base du coefficient d'adhérence à la route, du poids de véhicule, et de l'emplacement du centre de masse ; et
le calcul d'une accélération maximum et d'un ralentissement maximum du véhicule, sur la base de la force d'adhérence, de la performance de charge et de décharge de batterie, et de la performance de conduite à moteur électrique, pour estimer la capacité d'accélération et la capacité de ralentissement.

3. Procédé de commande de conduite autonome selon la revendication 1, dans lequel l'estimation de capacités de commande de mouvement d'un véhicule, sur la base de paramètres de performance et/ou de paramètres de structure du véhicule (S110), comprend :
le calcul d'une force d'adhérence disponible pour chaque pneu du véhicule, sur la base du coefficient d'adhérence à la route, du poids de véhicule, et de l'emplacement du centre de masse ; et
le calcul d'un braquage maximum du véhicule, sur la base de la force d'adhérence, de l'entrée du système de braquage, et de la performance de commande de braquage transmise en retour par le système de frein, pour estimer la capacité de braquage.

4. Système de commande de conduite autonome (200), comprenant :
un module d'estimation (210) configuré pour estimer des capacités de commande de mouvement d'un véhicule, sur la base de paramètres de performance et/ou de paramètres de structure du véhicule ;
un module de classement (220) configuré pour classer des fonctions de conduite autonome du véhicule, sur la base des capacités de commande de mouvement ; et
un module de fourniture de fonctions de conduite autonome (230) configuré pour fournir les fonctions de conduite autonome classées, sur la base d'un état du véhicule, dans lequel les capacités de commande de mouvement du véhicule comprennent une capacité d'accélération, une capacité de ralentissement, une capacité de braquage, une capacité de stationnement, et une capacité de suspension, dans lequel
les paramètres de performance comprennent : un coefficient d'adhérence à la route, une performance de charge et de décharge de batterie, une performance de conduite à moteur électrique, une entrée d'un système de braquage, une performance de commande de braquage transmise en retour par un système de frein, un état d'un système de stationnement électronique, un couple de frein du système de frein, un couple de freinage d'un moteur électrique, et un état d'un système de suspension ; et
les paramètres de structure comprennent : un poids de véhicule et un emplacement du centre de masse, qui est **caractérisé en ce que**
l'estimation de capacités de commande de mouvement d'un véhicule, sur la base de paramètres de performance et/ou de paramètres de structure du véhicule, comprend :
la computation d'états de fonction de stationnement disponibles du véhicule, sur la base de l'état du système de stationnement électronique, du couple de frein du système de frein, et du couple de freinage du moteur électrique, pour estimer la capacité de stationnement,
dans lequel les états de fonction de stationnement comprennent un état d'exécution à fonction complète, un état d'exécution à cinq minutes, et un état de non-exécution,
l'estimation d'un état d'une capacité de commande de raideur de suspension du véhicule, sur la base de l'état du système de suspension, pour estimer la capacité de suspension.

5. Système de commande de conduite autonome selon la revendication 4, dans lequel le module d'estimation (210) comprend : une unité d'estimation de force d'adhérence, une unité d'estimation de moteur électrique, une unité d'estimation de batterie, une unité d'estimation de freinage, une unité d'estimation de braquage, une unité d'estimation de stationnement, et une unité d'estimation de suspension.

6. Véhicule, comprenant le système de commande de conduite autonome selon la revendication 4.
